# FASCICULE DE BREVET EUROPEEN

(11) **EP 2 274 237 B1**
(45) Date de publication et mention de la délivrance du brevet: **09.05.2012**
(21) Numéro de dépôt: 09727359.3
(22) Date de dépôt: 26.02.2009
(51) Int. Cl.: C01B 39/48, C01B 39/04, B01J 35/02, B01J 35/10, B01J 29/04, B01J 20/28, B01J 20/18, B01J 21/12

(54) **MATÉRIAU ALUMINOSILICATE MESOSTRUCTURE FORME DE PARTICULES SPHERIQUES DE TAILLE SPECIFIQUE**
AUS KUGELFÖRMIGEN PARTIKELN VON SPEZIFISCHER GRÖSSE GEFORMTES MESOSTRUKTURIERTES ALUMINIUMSILIKATMATERIAL
MESOSTRUCTURED ALUMINOSILICATE MATERIAL FORMED FROM SPHERICAL PARTICLES OF SPECIFIC SIZE

(30) Priorité: 31.03.2008 FR 0801763
(43) Date de publication de la demande: 19.01.2011
(73) Titulaire: IFP Energies nouvelles, 92852 Rueil-Malmaison Cedex (FR)
(72) Inventeur: CHAUMONNOT, Alexandra, F-69008 Lyon (FR); COUPE, Aurélie, F-77186 Noisiel (FR); SANCHEZ, Clément, F-91190 Gif-sur-Yvette (FR); BOISSIERE, Cédric, F-75013 Paris (FR); MARTIN, Michel, F-69006 Lyon (FR)
(86) Numéro de dépôt international: PCT/FR2009/000209
(87) Numéro de publication internationale: WO 2009/122022

(56) Documents cités:
- EP-A- 1 627 852
- EP-A- 1 627 853

## Description

La présente invention se rapporte au domaine des matériaux aluminosilicates mésostructurés à forte teneur en aluminium. Elle concerne également la préparation de ces matériaux qui sont obtenus par l'emploi du procédé "EISA" (Evaporation Induced by Self Assembly) dénommé encore procédé d'auto-assemblage induit par évaporation. Les propriétés structurales et texturales des matériaux selon l'invention ainsi que leurs propriétés acido-basiques les rendent particulièrement adaptés pour des applications dans le domaine du raffinage et de la pétrochimie.

### Etat de la technique antérieure

Les nouvelles stratégies de synthèse permettant d'obtenir des matériaux à porosité définie dans une très large gamme, allant des matériaux microporeux aux matériaux macroporeux en passant par des matériaux à porosité hiérarchisée, c'est-à-dire ayant des pores de plusieurs tailles, connaissent un très large développement au sein de la communauté scientifique depuis le milieu des années 90 (G. J. de A. A. Soler-Illia, C. Sanchez, B. Lebeau, J. Patarin, Chem. Rev., 2002, 102, 4093). On obtient des matériaux dont la taille des pores est contrôlée. En particulier, le développement de méthodes de synthèse dites de "chimie douce" a conduit à l'élaboration de matériaux mésostructurés à basse température par la coexistence en solution aqueuse ou dans des solvants de polarité marqué de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est inférieure à la concentration micellaire critique, ce qui conduit soit à la formation de films mésostructurés dans le cas d'un dépôt sur substrat (technique "dip-coating"), soit à la formation d'une poudre mésostructurée après atomisation (technique aérosol) ou égouttage de la solution. A titre d'exemple, le brevet US 6.387.453 divulgue la formation de films hybrides organiques - inorganiques mésostructurés par la technique de "dip-coating", ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées. Pour exemple, la famille M41 S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de tensioactifs ioniques comme des sels d'ammonium quaternaire, possédant une structure généralement hexagonale, cubique ou lamellaire, des pores de diamètre uniforme compris dans une gamme de 1,5 à 10 nm et des parois amorphes d'épaisseur de l'ordre de 1 à 2 nm a largement été étudiée. Par la suite, afin d'accroître les propriétés de stabilité hydrothermale tout en développant des propriétés d'acido-basicité relatives à ces matériaux, l'incorporation de l'élément aluminium dans la charpente silicique amorphe par synthèse directe ou par des procédés de post-synthèse a été particulièrement regardée, les matériaux aluminosilicates obtenus possédant un rapport molaire Si/Al compris dans une gamme de 1 à 1000 (S. Kawi, S. C. Shen, Stud. Surf. Sci. Catal., 2000,129, 227 ; S. Kawi, S. C. Shen, Stud. Surf. Sci. Catal., 2000,129, 219 ; R. Mokaya, W. Jones, Chem. Commun., 1997, 2185). Les propriétés de stabilité hydrothermale et les propriétés d'acido-basicité ainsi développées par ces aluminosilicates n'ont cependant pas permis leur utilisation à un stade industriel dans des procédés de raffinage ou de pétrochimie, ce qui a progressivement conduit à l'utilisation de nouveaux agents structurants comme des macromolécules amphiphiles de type copolymères à bloc, ces dernières conduisant à des matériaux mésostructurés possédant une structure généralement hexagonale, cubique ou lamellaire, des pores de diamètre uniforme compris dans une gamme de 4 à 50 nm et des parois amorphes d'épaisseur comprise dans une gamme de 3 à 7 nm. A l'inverse des techniques "dip-coating" ou "aérosol" décrites ci-dessus, les matériaux ainsi définis ne sont pas obtenus par une concentration progressive des précurseurs inorganiques et de l'agent structurant au sein de la solution où ils sont présents mais sont classiquement obtenus par précipitation directe au sein d'une solution aqueuse ou dans des solvants de polarité marquée en jouant sur la valeur de la concentration micellaire critique de l'agent structurant. De plus, la synthèse de ces matériaux obtenus par précipitation nécessite une étape de mûrissement en autoclave et tous les réactifs ne sont pas intégrés aux produits en quantité stoechiométrique puisqu'ils peuvent se retrouver dans le surnageant. En fonction de la structure et du degré d'organisation souhaité pour le matériau mésostructuré final, ces synthèses peuvent avoir lieu en milieu acide (pH ≈ 1) (WO 99/37705) ou en milieu neutre (WO 96/39357), la nature de l'agent structurant utilisé jouant également un rôle prépondérant. Les particules élémentaires ainsi obtenues ne présentent pas de forme régulière et sont caractérisées généralement par une taille supérieure à 500 nm. Les matériaux aluminosilicates mésostructurés ainsi obtenus présentent des propriétés de stabilité hydrothermale accrues par rapport à leur homologues synthétisés via d'autres agents structurants, leurs propriétés d'acido-basicité demeurant à peu près similaires (1 < Si/Al < 1000). Des valeurs basses du rapport molaire Si/Al sont toutefois difficiles à obtenir car il n'est pas aisé d'incorporer des quantités importantes d'aluminium dans le matériau via ces procédés opératoires particuliers (D. Zaho, J. Feng, Q. Huo, N. Melosh, G. H. Fredrickson, B. F. Chmelke, G. D. Stucky, Science, 1998, 279, 548 ; Y. -H. Yue, A. Gédéon, J. -L. Bonardet, J. B. d'Espinose, N. Melosh, J. Fraissard, Stud. Surf. Sci. Catal., 2000,129, 209).

EP 1 627 852 A décrit un matériau aluminosilicate mésostructuré constitué d'au moins deux particules sphériques élémentaires, lesdites particules ayant un diamètre maximal de 10 µm. Ce document n'enseigne pas de méthode permettant d'obtenir des particules sphériques de taille plus importantes en gérant les cinétiques d'évaporation de manière à obtenir une mésostructure homogène dans lesdites particules sphériques.

### Résumé de l'invention

L'invention concerne un matériau aluminosilicate mésostructuré constitué d'au moins deux particules sphériques élémentaires, chacune desdites particules sphériques étant constituée d'une matrice à base d'oxyde de silicium et d'oxyde d'aluminium, ladite matrice ayant un diamètre de pores compris entre 1,5 et 30 nm, un rapport molaire Si/Al au moins égal à 1 et présentant des parois amorphes d'épaisseur comprise entre 1 et 30 nm, lesdites particules sphériques élémentaires ayant un diamètre D tel que 10 < D (µm) ≤ 100. Le matériau selon l'invention présente une forte teneur en aluminium et le rapport molaire Si/Al est de préférence compris entre 1 et 10.

La présente invention concerne également la préparation du matériau selon l'invention. Un procédé de préparation du matériau selon l'invention comprend a) le mélange en solution d'au moins un tensioactif, d'au moins un précurseur aluminique et d'au moins un précurseur silicique ; b) l'atomisation par aérosol de la solution obtenue à l'étape a) en utilisant une buse de pulvérisation qui conduit à la formation de gouttelettes liquides présentant un diamètre inférieur ou égal à 300 µm ; c) le séchage desdites gouttelettes, d) le broyage du produit solide obtenu à l'étape c) ; e) le mélange en solution d'au moins un tensioactif, d'au moins un précurseur aluminique, d'au moins un précurseur silicique et d'au moins une fraction du produit solide obtenu à l'étape d) ; f) l'atomisation par aérosol de la suspension obtenue à l'étape e) en utilisant une buse de pulvérisation conduisant à la formation de gouttelettes de suspension lesquelles sont précurseurs des particules élémentaires sphériques ayant un diamètre D tel que 10 < D (µm) ≤ 100 constitutives du matériau selon l'invention ; g) le séchage desdites gouttelettes obtenues à l'étape f) et h) l'élimination dudit tensioactif pour l'obtention d'un matériau à porosité mésostructurée.

### Intérêt de l'invention

Le matériau aluminosilicate selon l'invention est un matériau mésostructuré constitué de particules sphériques élémentaires, chacune desdites particules étant constituée d'une matrice à base d'oxyde de silicium et d'oxyde d'aluminium. Ladite matrice est mésostructurée et présente des parois amorphes d'épaisseur comprise entre 1 et 30 nm, un diamètre de pores uniforme compris entre 1,5 et 30 nm et un rapport molaire Si/Al au moins égal à 1. Lesdites particules élémentaires sphériques ont un diamètre D, exprimé en micron, tel que 10 < D (µm) ≤ 100 et de préférence D est compris en 11 et 70 µm. La taille contrôlable des ces particules résultant de la mise en oeuvre et de la maîtrise du procédé "EISA" par la demanderesse, ainsi que leur forme parfaitement sphérique permettent d'avoir un meilleur contrôle de la diffusion des composés lors de l'emploi du matériau selon l'invention comme catalyseur ou adsorbant pour des applications dans le domaine du raffinage et de la pétrochimie, comparativement à des matériaux connus de l'état de la technique se présentant sous la forme de particules élémentaires de forme non homogène, c'est-à-dire irrégulière. La matrice constituant chacune desdites particules du matériau selon l'invention présente avantageusement un rapport molaire Si/Al compris entre 1 et 10 et très avantageusement entre 1 et 5 : le matériau selon l'invention présente une teneur élevée en aluminium, ce qui confère au matériau selon l'invention des propriétés d'acido-basicité intéressantes pour des applications en catalyse. Le matériau selon l'invention est aussi particulièrement intéressant pour la porosité organisée qu'il présente à l'échelle des mésopores.

### Exposé de l'invention

La présente invention a pour objet un matériau aluminosilicate mésostructuré constitué d'au moins deux particules sphériques élémentaires, chacune desdites particules sphériques étant constituée d'une matrice mésostructurée à base d'oxyde de silicium et d'oxyde d'aluminium, ladite matrice mésostructurée ayant un diamètre de pores compris entre 1,5 et 30 nm, un rapport molaire Si/Al au moins égal à 1 et présentant des parois amorphes d'épaisseur comprise entre 1 et 30 nm, lesdites particules sphériques élémentaires ayant un diamètre D supérieur à 10 µm et inférieur ou égal à 100 µm (10 < D (µm) ≤ 100).

Conformément à l'invention, la matrice à base d'oxyde de silicium et d'oxyde d'aluminium constituant chacune desdites particules sphériques du matériau aluminosilicate selon l'invention comporte avantageusement une forte teneur en aluminium : le rapport molaire Si/Al est de préférence compris entre 1 et 10 et de manière très préférée compris entre 1 et 5.

Par matériau mésostructuré, on entend au sens de la présente invention un matériau présentant une porosité organisée à l'échelle des mésopores de chacune desdites particules sphériques, c'est-à-dire une porosité organisée à l'échelle des pores ayant un diamètre uniforme compris entre 1,5 et 30 nm et de préférence entre 1,5 et 10 nm et répartis de façon homogène et régulière dans chacune desdites particules (mésostructuration du matériau).

La matrice à base d'oxyde de silicium et d'oxyde d'aluminium, comprise dans chacune des particules sphériques constituant le matériau selon l'invention, est mésostructurée : elle présente des mésopores ayant un diamètre uniforme, c'est-à-dire identique pour chaque mésopore, compris entre 1,5 et 30 nm et de préférence entre 1,5 et 10 nm, répartis de façon homogène et régulière dans chacune des particules sphériques. La matière située entre les mésopores de chacune desdites particules sphériques du matériau selon l'invention est amorphe et forme des parois, ou murs, dont l'épaisseur est comprise entre 1 et 30 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de la matrice à base d'oxyde de silicium et d'oxyde d'aluminium, laquelle peut être hexagonale, hexagonale bidimensionnelle, vermiculaire ou cubique et de façon préférée vermiculaire.

Conformément à l'invention, lesdites particules sphériques élémentaires constituant le matériau selon l'invention ont un diamètre D, exprimé en micron, strictement supérieur à 10 µm et inférieur ou égal à 100 µm (10 < D (µm) ≤ 100). De préférence, le diamètre D desdites particules sphériques est avantageusement compris entre 11 et 70 µm. Selon un mode de réalisation particulier du matériau selon l'invention, lesdites particules sphériques élémentaires présentent un diamètre D compris entre 11 et 50 µm et de manière très préférée entre 15 et 50 µm. Plus précisément, lesdites particules sphériques élémentaires sont présentes dans le matériau selon l'invention sous la forme d'agrégats.

Le matériau selon l'invention présente avantageusement une surface spécifique comprise entre 200 et 1200 m²/g et de manière très avantageuse comprise entre 300 et 1000 m²/g.

La présente invention concerne également le procédé de préparation du matériau selon l'invention. Un procédé de préparation du matériau selon l'invention appelé "procédé de préparation selon l'invention" comprend a) le mélange en solution d'au moins un tensioactif, d'au moins un précurseur aluminique et d'au moins un précurseur silicique ; b) l'atomisation par aérosol de la solution obtenue à l'étape a) en utilisant une buse de pulvérisation qui conduit à la formation de gouttelettes liquides présentant un diamètre inférieur ou égal à 300 µm ; c) le séchage desdites gouttelettes, d) le broyage du produit solide obtenu à l'étape c) ; e) le mélange en solution d'au moins un tensioactif, d'au moins un précurseur aluminique, d'au moins un précurseur silicique et d'au moins une fraction du produit solide obtenu à l'étape d) de manière à former une suspension ; f) l'atomisation par aérosol de la suspension obtenue à l'étape e) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g) le séchage desdites gouttelettes obtenues à l'étape f) et h) l'élimination dudit tensioactif introduit dans les étapes a) et e) pour l'obtention d'un matériau à porosité mésostructurée.

Conformément audit procédé de préparation selon l'invention, la fraction du produit solide obtenu à l'étape d) et utilisée pour la mise en oeuvre de ladite étape e) représente de 1 à 100 % poids, de préférence de 1 à 80% poids et de manière encore plus préférée de 5 à 50 % poids de la quantité totale de produit solide broyé à l'étape d).

Selon un premier mode particulier de réalisation du procédé de préparation selon l'invention, une partie seulement du produit solide issu de l'étape c) est broyée au cours de l'étape d) du procédé selon l'invention ; la partie non broyée n'étant généralement pas réutilisée.

Selon un deuxième mode particulier de réalisation du procédé de préparation selon l'invention, l'étape h) d'élimination du tensioactif est réalisée préalablement à l'étape de broyage selon l'étape d) de telle sorte que ladite étape d) est effectuée sur un produit solide exempt de tensioactifs organiques. Les étapes a), b), c), h), d), e) et f) devenues consécutives dans le cas particulier dudit deuxième mode de préparation selon l'invention sont suivies par un nouveau cycle de séchage des gouttelettes et d'élimination du tensioactif introduit dans l'étape e) comme décrit selon les étapes g) et h).

Selon l'invention, le pourcentage volumique en composés non volatils présents dans la suspension selon l'étape e) du procédé de préparation selon l'invention est d'au moins 7 %, de préférence d'au moins 7,5 % et de façon encore plus préférée d'au moins 10 %. Ledit pourcentage volumique en composés non volatils est défini comme étant le rapport du volume occupé par la fraction inorganique non volatile sous forme d'oxyde(s) condensé(s) (SiO₂ et AlO_{1,5}) dans la particule élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile V_{inorg} est défini par le rapport m_{inorg/}p_{inorg} avec m_{inorg} = masse finale de la fraction inorganique sous forme d'oxyde(s) condensé(s) présente dans chaque particule sphérique élémentaire, c'est-à-dire SiO₂ et AlO_{1,5} issus des précurseurs inorganiques présents dans l'étape a) et l'étape e) du procédé de préparation selon l'invention additionnés de la fraction inorganique du produit solide de l'étape c) du procédé de préparation selon l'invention et ρ_{inorg} est en moyenne égal à 2 (approximation valable pour une fraction inorganique du type "réseau aluminosilicate"). De même, le volume occupé par la fraction organique non volatile V_{org} est défini par le rapport m_{org/}ρ_{org} avec m_{org} = masse de tensioactif présente dans la particule élémentaire, c'est-à-dire le tensioactif présent dans l'étape a) et dans l'étape e) du procédé de préparation selon l'invention additionnés de la fraction organique du produit solide de l'étape c) du procédé de préparation selon l'invention et ρ_{org} = 1 (approximation valable pour une grande majorité de fraction organique non volatile). Le volume total est tel que V_{T} = V_{inorg} + V_{org} + Vₛₒₗᵥₐₙₜ, V_{inorg} et V_{org} étant définis ci-dessus et Vₛₒₗᵥₐₙₜ correspond au volume total de solvant constitué d'eau et éventuellement d'un solvant organique.

Les précurseurs silicique et aluminique utilisés dans les étapes a) et e) du procédé selon l'invention sont des précurseurs d'oxydes inorganiques bien connus de l'Homme du métier. Le précurseur silicique est obtenu à partir de toute source de silice et avantageusement d'un précurseur silicate de sodium de formule SiO₂,NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4. Le précurseur silicique peut également avantageusement être un précurseur organométallique de formule Si(OR)₄₋ₓR'ₓ où R = H, méthyle, éthyle et R' est une chaîne alkyle ou une chaîne alkyle fonctionnalisée, par exemple par un groupement thiol, amino, β dicétone, acide sulfonique, x étant compris entre 0 et 4. Le précurseur aluminique est avantageusement un sel inorganique d'aluminium de formule AlX₃, X étant un halogène ou le groupement NO₃. De préférence, X est le chlore. Le précurseur aluminique peut être aussi un précurseur organométallique de formule Al(OR")₃ ou R" = éthyle, isopropyle, n-butyle, s-butyle ou t-butyle ou un précurseur chélaté tel que l'aluminium acétylacétonate (Al(C₅H₈O₂)₃). Le précurseur aluminique peut aussi être un oxyde ou un hydroxyde d'aluminium.

Le tensioactif utilisé dans les étapes a) et e) du procédé selon l'invention est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de céthyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[CH₂-CH₂-CH₂-CH₂-O-CO-R1- avec R1 = C₄F₉, C₈F₁₇, etc.), les polymères biologiques comme les polyacides aminés (poly-lysine, alginates, etc.), les dendrimères, les polymères constitués de chaînes de poly(oxyde d'alkylène). De façon générale, tout copolymère à caractère amphiphile connu de l'Homme du métier peut être utilisé (S. Förster, M. Antionnetti, Adv.Mater, 1998, 10, 195-217 ; S. Förster, T.Plantenberg, Angew. Chem. Int. Ed, 2002, 41, 688-714 ; H. Cölfen, Macromol. Rapid Commun, 2001, 22, 219-252). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ(PPO)_{y}-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans les étapes a) et e) du procédé selon l'invention. Pour un copolymère à quatre blocs, deux des blocs sont constitués d'une chaîne de poly(oxyde d'alkylène) de nature hydrophile et les deux autres blocs sont constitués d'une chaîne de poly(oxydes) d'alkylène de nature hydrophobe.

La solution dans laquelle sont mélangés au moins un précurseur silicique, au moins un précurseur aluminique et au moins un tensioactif conformément aux étapes a) et e) du procédé selon l'invention, peut être acide, neutre ou basique. De préférence, ladite solution est acide et présente un pH maximal égal à 2, de préférence compris entre 0 et 2. Les acides utilisés pour obtenir une solution acide de pH maximal égal à 2 sont, de façon non exhaustive, l'acide chlorhydrique, l'acide sulfurique et l'acide nitrique. Ladite solution peut être aqueuse ou peut être un mélange eau-solvant organique, le solvant organique étant préférentiellement un solvant polaire, notamment un alcool, préférentiellement de l'éthanol. Ladite solution peut aussi être pratiquement organique, de préférence pratiquement alcoolique, la quantité d'eau étant telle que l'hydrolyse des précurseurs inorganiques soit assurée (quantité stoechiométrique). De manière très préférée, ladite solution dans laquelle sont mélangés au moins un précurseur silicique, au moins un précurseur aluminique et au moins un tensioactif conformément à l'étape a) et l'étape e) du procédé de l'invention est un mélange aquo-organique acide, de manière très préférée un mélange eau acide-alcool. Ladite solution conformément à l'étape e) du procédé de l'invention comporte également au moins une fraction du produit solide obtenu à l'étape d) du procédé de l'invention.

Les concentrations en précurseurs silicique et aluminique sont définies par le rapport molaire Si/Al du matériau selon l'invention, ledit rapport molaire Si/Al étant au moins égal à 1, de préférence compris dans la gamme de 1 à 1000, plus précisément dans la gamme de 1 à 10 et de façon très préférentielle dans la gamme de 1 à 5. La concentration initiale en tensioactif introduit dans le mélange conformément aux étapes a) et e) du procédé selon l'invention est définie par c₀ et c₀ est définie par rapport à la concentration micellaire critique (c_{mc}) bien connue de l'Homme du métier. La c_{mc} est la concentration limite au delà de laquelle se produit le phénomène d'auto-arrangement des molécules du tensioactif dans la solution. La concentration c₀ peut être inférieure, égale ou supérieure à la c_{mc}, de préférence elle est inférieure à la c_{mc}. Dans une mise en oeuvre préférée de la préparation du matériau selon l'invention, la concentration c₀ est inférieure à la c_{mc} et ladite solution respectivement la suspension visée à l'étape a) respectivement à l'étape e) du procédé selon l'invention est un mélange eau acide- alcool.

L'étape d'atomisation du mélange selon les étapes b) et f) du procédé selon l'invention produit des gouttelettes sphériques présentant un diamètre inférieur ou égal à 300 µm par l'utilisation d'une buse de pulvérisation, ladite buse pouvant être "mono-fluide" ou "bi-fluide" (avec contrôle de la pression d'un gaz tel que de l'air comprimé ou de l'azote) selon les termes connus de l'Homme du métier. Par exemple des buses de chez Spraying System Emani peuvent être employées (buse "mono-fluide" de type N22^{®} ou "bi-fluide" de type SU4^{®} par exemple). La distribution en taille de ces gouttelettes est de type lognormale. L'atomisation de la solution se fait dans une chambre dans laquelle est envoyé un gaz vecteur, un mélange air sec/azote pour les plus petites installations et azote seul pour des installations plus conséquentes. Conformément aux étapes c) et g) du procédé de préparation selon l'invention, on procède au séchage desdites gouttelettes. Ce séchage est réalisé par le contact desdites gouttelettes avec le gaz ci-dessus, ce qui conduit à l'évaporation progressive de la solution respectivement de la suspension, par exemple de la solution aquo-organique acide respectivement de la suspension aquo-organique, obtenue au cours de l'étape a) respectivement de l'étape e) du procédé de préparation du matériau selon l'invention, et ainsi à l'obtention de particules élémentaires sphériques. La température de sortie assurant le séchage dans la chambre de l'atomiseur est comprise dans une gamme de 80 à 450°C. La distribution de temps de séjour des gouttelettes ou particules dans la chambre d'atomisation est de l'ordre de quelques secondes. Lors de l'étape d) du procédé selon l'invention, les particules sont broyées (broyeur jet d'air Netzsch CGS10 par exemple) et ramenées à quelques µm (3 à 5 µm en général). Suivant l'installation, les particules sont récoltées à la sortie d'un cyclone ou dans un filtre à manche. Le séchage des particules selon les étapes c) et g) du procédé selon l'invention est avantageusement suivi d'un traitement thermique complémentaire à une température comprise entre 50 et 300°C avant l'élimination du tensioactif au cours de l'étape h) du procédé selon l'invention afin d'obtenir le matériau selon l'invention à porosité mésostructurée. Ladite élimination du tensioactif introduit dans les étapes a) et e) du procédé selon l'invention est avantageusement réalisée par des procédés d'extraction chimique ou par traitement thermique et de préférence par calcination sous air dans une gamme de température de 300 à 1000°C et plus précisément dans une gamme de 450 à 600°C pendant une durée de 1 à 24 heures et de façon préférée pendant une durée de 2 à 6 heures.

Dans le cas où la solution visée à l'étape a) et la solution visée à l'étape e) du procédé de préparation selon l'invention sont des mélanges eau-solvant organique, de préférence acide, il est préféré au cours des étapes a) et e) du procédé selon l'invention que la concentration en tensioactif à l'origine de la mésostructuration de la matrice soit inférieure à la concentration micellaire critique de sorte que l'évaporation desdites solutions aquo-organiques, préférentiellement acides, au cours des étapes b) et f) du procédé selon l'invention induise un phénomène de micellisation ou d'auto-assemblage conduisant à la mésostructuration de la matrice du matériau selon l'invention. Lorsque c₀<c_{mc}, la mésostructuration de la matrice du matériau selon l'invention et préparé selon les procédés décrits ci-dessus est consécutive à une concentration progressive, au sein de chaque gouttelette, du précurseur silicique, du précurseur aluminique et du tensioactif, jusqu'à une concentration en tensioactif c>c_{mc} résultant d'une évaporation de chacune des solutions aquo-organiques, préférentiellement acides. De manière générale, l'augmentation de la concentration conjointe des précurseurs silicique et aluminique et du tensioactif provoque la précipitation des précurseurs aluminique et silicique autour du tensioactif auto-organisé et en conséquence la structuration du matériau selon l'invention. Les interactions phases inorganique / inorganique, phases organique / organique et phases organique / inorganique conduisent par un mécanisme d'auto-assemblage coopératif à l'hydrolyse / condensation des précurseurs inorganiques silicique et aluminique autour du tensioactif. L'emploi de buses de pulvérisation est particulièrement avantageux pour contraindre les réactifs présents dans les étapes b) et f) du procédé selon l'invention à interagir entre eux, aucune perte de matière hormis les solvants n'étant possible, la totalité des éléments aluminium et silicium présents initialement étant ainsi parfaitement conservée tout au long du processus au lieu d'être éliminée lors des étapes de filtration et de lavages rencontrées dans des procédés de synthèse classiques connues de l'Homme de l'art.

L'obtention de particules élémentaires sphériques de diamètre D tel que 10 < D (µm) ≤ 100 au moyen du procédé "EISA", en particulier par la technique aérosol, spécifique de l'invention oblige à une connaissance et une maîtrise accrues des paramètres opératoires de synthèse, essentiellement au niveau des étapes a), b), e) et f) du procédé selon l'invention, afin de maintenir le processus de mésostructuration par auto-assemblage du tensioactif conjointement aux réactions d'hydrolyse / condensation des divers précurseurs inorganiques. En effet, la production de gouttelettes de diamètre inférieur ou égal à 300 µm conduit à des cinétiques d'évaporation de la solution ou de la suspension aquo-organique d'autant plus lentes que la gouttelette est grosse (car proportionnelles au carré du diamètre de la goutte à évaporer). Si le temps d'évaporation total est plus lent que le temps de condensation de la matière inorganique à la périphérie de la goutte, il se forme une couche de matériau condensé à l'interface d'évaporation constituant une barrière supplémentaire à l'évaporation. Si cette couche supplémentaire devient rigide avant que suffisamment de solvant, c'est-à-dire d'eau éventuellement additionnée de solvant organique, se soit évaporé, le rapport du volume des constituants polaires sur le volume des constituants apolaires dans les mélanges selon les étapes a) et e) du procédé de l'invention noté Vₚₒₗ/Vₐₚₒₗ = (V_{inorg} + Vₛₒₗᵥₐₙₜ = V_{org polaire})/(V_{org hydrophobe}), paramètre critique qui conditionne l'apparition d'une mésostructuration, est variable entre les zones "pellicule rigide de surface" et "coeur de la particule" (avec V_{inorg} = m_{inorg}/ρ_{inorg} tel que défini plus haut dans la présente description et V_{org} polaire + V_{org} hydrophobe = V_{org} tel que défini également plus haut dans la présente description et Vₛₒₗᵥₐₙₜ = volume total de solvant, le solvant étant formé d'eau et éventuellement d'un solvant organique, V_{org polaire} = volume des parties polaires des réactifs organiques, V_{org hydrophobe} = volume des parties apolaires des réactifs organiques). Au coeur, les éléments présents doivent alors accommoder la mésostructuration à un volume total (défini par le volume inscrit dans la croûte rigide) supérieur à la valeur optimale. Si le rapport Vₚₒₗ/Vₐₚₒₗ est trop éloigné de la valeur optimale de mésostructuration, l'homogénéité de mésostructure des particules produites se détériore et peut disparaître pour former des particules constituées d'une croûte bien mésostructurée et d'un coeur non mésostructuré (amorphe ou bien résultant d'une décomposition spinodale selon les éléments constitutifs et les solvants employés). Afin d'éviter ce phénomène rédhibitoire pour l'élaboration du matériau selon l'invention, il convient dans les étapes b) et f) du procédé selon l'invention, de limiter le volume de solvant à évaporer ou autrement dit, de concentrer les solutions aérosolées afin de travailler préférentiellement avec une valeur C₀ proche ou supérieure à la C_{mc}. Ceci se traduit par la présence de composés non volatiles dans la suspension selon l'étape e) du procédé de préparation selon l'invention dans une quantité telle que le pourcentage volumique desdits composés présents dans ladite suspension est d'au moins 7%. Le maximum de ce pourcentage volumique est propre à chaque système et est limité principalement par trois critères : (i) le manque de stabilité dans le temps des solutions obtenues aux étapes a) et e) du procédé de l'invention, (ii) la précipitation spontanée de la solution à trop forte concentration (soit par manque de solubilité de l'un ou plusieurs constituants, soit par réaction de condensation des constituants inorganiques présents en solutions obtenues aux étapes a) et e) du procédé de l'invention, et (iii) les propriétés rhéologiques des solutions obtenues aux étapes a) et e) du procédé de l'invention qui peuvent devenir inadaptées à la formation des gouttelettes par les buses de pulvérisations (viscosité trop élevée par exemple).

Le matériau aluminosilicate mésostructuré à forte teneur en aluminium de la présente invention peut être obtenu sous forme de poudre, de billes, de pastilles, de granulés ou d'extrudés, les opérations de mises en forme étant réalisées via les techniques classiques connues de l'Homme de l'art. De préférence, le matériau aluminosilicate mésostructuré selon l'invention est obtenu sous forme de poudre, laquelle est constituée de particules sphériques élémentaires ayant un diamètre D tel que 10 < D (µm) ≤ 100 et de préférence compris entre 11 et 70 µm, ce qui facilite le contrôle de la diffusion éventuelle des composés dans le cas de l'emploi du matériau selon l'invention comme catalyseur ou adsorbant dans des applications de raffinage ou de pétrochimie.

Le matériau aluminosilicate mésostructuré de l'invention est caractérisé par plusieurs techniques d'analyses et notamment par Diffraction des Rayons X aux bas angles (DRX aux bas angles), par Isotherme d'adsorption d'azote, par Microscopie électronique à transmission (MET), par Fluorescence X (FX).

La technique de Diffraction des Rayons X aux bas angles (valeurs de l'angle 2θ comprises entre 0,5 et 3°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Lés pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d ₍ₕₖₗ₎ * sin (θ) = n * λ. Cette indexation permet alors la détermination des paramètres de maille (abc) du réseau direct, la valeur de ces paramètres étant fonction de la structure hexagonale, cubique, ou vermiculaire obtenue. Pour exemple, le diffractogramme de Rayons X aux bas angles d'un matériau aluminosilicate mésostructuré obtenu selon le procédé de l'invention via l'emploi du copolymère à bloc particulier dénommé poly(oxyde d'éthylène)₂₀-poly(oxyde de propylène)₇₀-poly(oxyde d'éthylène)₂₀ (PEO₂₀-PPO₇₀-PEO₂₀ ou Pluronic 123) présente un pic de corrélation parfaitement résolu correspondant à la distance de corrélation entre pores d caractéristique d'une structure de type vermiculaire et définie par la relation de Bragg 2 d * sin (θ) = n * λ.

L'analyse Isotherme d'adsorption d'azote correspondant à l'adsorption physique de molécules d'azote dans la porosité du matériau via une augmentation progressive de la pression à température constante renseigne sur les caractéristiques texturales particulières du matériau selon l'invention. En particulier, elle permet d'accéder à la surface spécifique et à la distribution mésoporeuse du matériau. On entend par surface spécifique, la surface spécifique B.E.T. (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309. La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH est décrit dans le périodique "The Journal of American Society", 1951, 73, 373 écrit par E. P. Barrett, L. G. Joyner et P. P. Halenda. Dans l'exposé qui suit, le diamètre des mésopores φ de la matrice mésostructurée donné correspond au diamètre moyen à la désorption d'azote défini comme étant un diamètre tel que tous les pores inférieurs à ce diamètre constituent 50% du volume poreux (Vp) mesuré sur la branche de désorption de l'isotherme azote. De plus, l'allure de l'isotherme d'adsorption d'azote et de la boucle d'hystérésis peut renseigner sur la nature de la mésoporosité. Pour exemple, l'isotherme d'adsorption d'azote relative au matériau aluminosilicate mésostructuré selon l'invention et obtenu grâce au procédé de l'invention lorsque l'on utilise le copolymère à bloc particulier dénommé poly(oxyde d'éthylène)₂₀-poly(oxyde de propylène)₇₀-poly(oxyde d'éthylène)₂₀ (PEO₂₀-PPO₇₀PEO₂₀ ou Pluronic 123 ou P123) est caractérisée par une isotherme d'adsorption de classe IV et une boucle d'hystérésis de type H1, la courbe de distribution poreuse associée étant quant à elle représentative d'une population de mésopores de diamètre uniforme centré dans une gamme de 1,5 à 30 nm. La différence entre la valeur du diamètre des pores φ et la distance de corrélation entre pores d défini par DRX aux bas angles comme décrit ci-dessus permet d'accéder à la grandeur e où e = d - φ et est caractéristique de l'épaisseur des parois amorphes de la matrice mésostructurée constituant chacune des particules sphériques du matériau aluminosilicate mésostructuré.

L'analyse par microscopie électronique par transmission (MET) est une technique également largement utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 0,2 nm. Dans l'exposé qui suit, les photos MET seront réalisées à partir de coupes microtomes de l'échantillon afin de visualiser une section d'une particule sphérique élémentaire du matériau selon l'invention. Pour exemple, les images MET obtenues pour un matériau aluminosilicate mésostructuré selon l'invention et obtenu grâce au procédé de l'invention lorsqu'on utilise le copolymère comme décrit précédemment via l'emploi du copolymère à bloc particulier dénommé Pluronic 123 présentent des particules élémentaires sphériques ayant une mésostructure vermiculaire, la matière étant définie par les zones sombres. L'analyse de l'image permet également d'accéder aux paramètres d, φ et e caractéristiques de la matrice mésostructurée définis précédemment.

La morphologie et la distribution en taille des particules élémentaires ont été établies par analyse de photos obtenues par MEB.

La structure de la matrice mésostructurée constituant chacune des particules du matériau selon l'invention peut être cubique, vermiculaire ou hexagonale en fonction de la nature du copolymère choisi comme agent structurant. A titre d'exemple, un matériau aluminosilicate mésostructuré obtenu comme décrit précédemment via l'emploi du copolymère à bloc particulier dénommé poly(oxyde d'éthylène)₂₀-poly(oxyde de propylène)₇₀-poly(oxyde d'éthylène)₂₀ (PEO₂₀-PPO₇₀-PEO₂₀ ou Pluronic 123) présente une structure vermiculaire.

La présente invention concerne l'utilisation du matériau aluminosilicate mésostructuré selon l'invention comme adsorbant pour le contrôle de la pollution ou comme tamis moléculaire pour la séparation. La présente invention a donc également pour objet un adsorbant comprenant le matériau aluminosilicate mésostructuré selon l'invention. Il est également avantageusement utilisé comme solide acide pour catalyser des réactions, par exemple celles intervenant dans les domaines du raffinage et de la pétrochimie.

Lorsque le matériau aluminosilicate mésostructuré selon l'invention est utilisé comme catalyseur, ce matériau peut être associé à une matrice inorganique qui peut être inerte ou catalytiquement active et à une phase métallique. La matrice inorganique peut être présente simplement comme liant pour maintenir ensemble les particules dudit matériau sous les différentes formes connues des catalyseurs (extrudés, pastilles, billes, poudres) ou bien peut être ajoutée comme diluant pour imposer le degré de conversion dans un procédé qui sinon progresserait à une allure trop rapide, conduisant à un encrassement du catalyseur en conséquence d'une formation importante de coke. Des matrices inorganiques typiques sont notamment des matières de support pour les catalyseurs comme les différentes formes de silice, d'alumine, de silice-alumine, la magnésie, la zircone, les oxydes de titane, de bore, les phosphates d'aluminium, de titane, de zirconium, les argiles telles que le kaolin, la bentonite, la montmorillonite, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active. Ledit matériau de la présente invention peut aussi être associé à au moins une zéolithe et jouer le rôle de phase active principale ou d'additif. La phase métallique peut être introduite intégralement sur ledit matériau de l'invention. Elle peut être également introduite intégralement sur la matrice inorganique ou encore sur l'ensemble matrice inorganique - solide mésostructuré par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

Les compositions catalytiques comportant le matériau de la présente invention conviennent de façon générale à la mise en oeuvre des principaux procédés de transformation des hydrocarbures et des réactions de synthèse de composés organiques.

Les compositions catalytiques comportant le matériau de l'invention trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage, de reformage, d'hydrogénation et de déshydrogénation, d'oxydation, d'halogénation, d'hydrocraquage, d'hydroconversion, d'hydrotraitement, d'hydrodésulfuration et d'hydrodéazotation, d'élimination catalytique des oxydes d'azote, lesdites réactions impliquant des charges comprenant des hydrocarbures aliphatiques saturés et insaturés, des hydrocarbures aromatiques, des composés organiques oxygénés et des composés organiques contenant de l'azote et/ou du soufre ainsi que des composés organiques contenant d'autres groupes fonctionnels.

L'invention est illustrée au moyen des exemples suivants.

### EXEMPLES

Dans les exemples qui suivent, la technique aérosol utilisée est celle décrite ci-dessus dans l'exposé de l'invention.

### Exemple 1 (invention) : préparation d'un matériau aluminosilicate de rapport Si/Al = 4 selon le procédé de préparation selon l'invention.

1 kg de trichlorure d'aluminium hexahydraté sont ajoutés à une solution contenant 10 kg d'éthanol, 5 l d'eau, 36 ml d'HCl et 1,4 kg de tensioactif CTAB. L'ensemble est laissé sous agitation à température ambiante jusqu'à dissolution complète du précurseur aluminique. 3,6 kg de tetraéthylorthosilicate (TEOS) sont alors additionnés. Après une agitation de 10 min à température ambiante, l'ensemble est atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées entre 100 et 120°C selon le protocole décrit dans l'exposé de l'invention ci-dessus, conformément à l'étape c) du procédé de l'invention. Les particules sont récoltées dans un filtre à manche. Lesdites particules sont broyées à l'aide d'un broyeur jet d'air et ramenée à quelques µm (de 3 à 5 µm). Une fraction de 30 % poids de ces particules broyées est alors réintroduite dans une solution de même formulation que la solution initiale puis la suspension est à nouveau atomisée à l'aide d'une buse de pulvérisation "mono-fluide" comme précédemment et les gouttelettes séchées entre 100 et 120°C selon le protocole décrit dans l'exposé de l'invention ci-dessus, conformément à l'étape g) du procédé de l'invention. La poudre récoltée dans un filtre à manche est alors calcinée sous air de manière à éliminer le tensioactif (CTAB) pendant 5 h à T = 550°C. Le pourcentage volumique en composés non volatils présents dans la suspension avant la deuxième atomisation (étape e) du procédé selon l'invention) est égal à 10,4 %. Le solide est caractérisé par DRX aux bas angles, par isotherme d'adsorption d'azote, par MET et par fluorescence X. L'analyse MET montre que le matériau final présente une mésoporosité organisée caractérisée par une structure vermiculaire. L'analyse Isotherme d'adsorption d'azote conduit à une surface spécifique du matériau final de S_{BET} = 800 m²/g et à un diamètre mésoporeux de φ = 2,4 nm. L'analyse DRX aux petits angles conduit à la visualisation d'un pic de corrélation à l'angle 2θ = 2,4. La relation de Bragg 2 d * sin (1,2) = 1,5406 permet de calculer la distance d de corrélation entre les pores de la matrice mésotructurée, soit d = 3,7 nm. L'épaisseur des parois du matériau mésostructurée définie par e = d - φ est donc de e = 1,3 nm. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm.

### Exemple 2 (invention) : préparation d'un matériau aluminosilicate de rapport Si/Al = 9 selon le procédé de préparation selon l'invention.

520 g de trichlorure d'aluminium hexahydraté sont ajoutés à une solution contenant 10 kg d'éthanol, 5l d'eau, 36 ml d'HCl et 1,4 kg de tensioactif P123. L'ensemble est laissé sous agitation à température ambiante jusqu'à dissolution complète du précurseur aluminique. 4,0 kg de tétraéthylorthosilicate (TEOS) sont alors additionnés. Après une agitation de 18 heures à température ambiante, l'ensemble est atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées entre 100 et 120°C selon le protocole décrit dans l'exposé de l'invention ci-dessus, conformément à l'étape c) du procédé de l'invention. Les particules sont récoltées dans un filtre à manche Lesdites particules sont broyées à l'aide d'un broyeur jet d'air et ramenée à quelques µm (de 3 à 5 µm). Une fraction de 30 % poids de ces particules broyées est alors réintroduite dans une solution de même formulation que la solution initiale puis la suspension est à nouveau atomisée à l'aide d'une buse de pulvérisation "mono-fluide" comme précédemment et les gouttelettes séchées entre 100 et 120°C selon le protocole décrit dans l'exposé de l'invention ci-dessus, conformément à l'étape g) du procédé de l'invention. La poudre récoltée dans un filtre à manche est alors calcinée sous air de manière à éliminer le tensioactif P123 pendant 5 h à T = 550°C. Le pourcentage volumique en composés non volatils présents dans la suspension avant la deuxième atomisation (étape e) du procédé selon l'invention) est égal à 10,4 %. Le solide est caractérisé par DRX aux bas angles, par isotherme d'adsorption d'azote, par MET et par fluorescence X. L'analyse MET montre que le matériau final présente une mésoporosité organisée caractérisée par une structure vermiculaire. L'analyse Isotherme d'adsorption d'azote conduit à une surface spécifique du matériau final de S_{BET} = 420 m²/g et à un diamètre mésoporeux de 5,3 nm. L'analyse DRX aux petits angles conduit à la visualisation d'un pic de corrélation à l'angle 2θ = 0,72. La relation de Bragg 2 d * sin (0,36) = 1,5406 permet de calculer la distance d de corrélation entre les pores de la matrice mésostructurée, soit d = 12,2 nm. L'épaisseur des parois du matériau mésostructurée définie par e = d - φ est donc de e = 6,9 nm. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm.

## Revendications

1. Matériau aluminosilicate mésostructuré constitué d'au moins deux particules sphériques élémentaires, chacune desdites particules sphériques étant constituée d'une matrice mésostructurée à base d'oxyde de silicium et d'oxyde d'aluminium, ladite matrice mésostructurée ayant un diamètre de pores compris entre 1,5 et 30 nm, un rapport molaire Si/Al au moins égal à 1 et présentant des parois amorphes d'épaisseur comprise entre 1 et 30 nm, lesdites particules sphériques élémentaires ayant un diamètre D supérieur à 10 µm et inférieur ou égal à 100 µm.

2. Matériau selon la revendication 1 tel que lesdites particules sphériques élémentaires ont un diamètre D compris entre 11 et 70 µm.

3. Matériau selon la revendication 2 tel que lesdites particules sphériques élémentaires ont un diamètre D compris entre 11 et 50 µm.

4. Matériau selon la revendication 3 tel que lesdites particules sphériques élémentaires ont un diamètre compris D entre 15 et 50 µm.

5. Matériau selon l'une des revendications 1 à 4 tel que le rapport molaire Si/Al de ladite matrice mésostructurée est compris entre 1 et 10.

6. Matériau selon la revendication 5 tel que le rapport molaire Si/Al de ladite matrice mésostructurée est compris entre 1 et 5.

7. Matériau selon l'une des revendications 1 à 6 tel que le diamètre des pores de ladite matrice est compris entre 1,5 et 10 nm.

8. Matériau selon l'une des revendications 1 à 7 tel qu'il présente une surface spécifique comprise entre 200 et 1200 m²/g.

9. Matériau selon la revendication 8 tel qu'il présente une surface spécifique comprise entre 300 et 1000 m²/g.

10. Matériau selon l'une des revendications 1 à 9 tel que ladite matrice à base d'oxyde de silicium et d'oxyde d'aluminium présente une structure hexagonale, vermiculaire ou cubique.

11. Procédé de préparation d'un matériau aluminosilicate mésostructuré selon l'une des revendications 1 à 10 comprenant a) le mélange en solution d'au moins un tensioactif, d'au moins un précurseur aluminique et d'au moins un précurseur silicique ; b) l'atomisation par aérosol de la solution obtenue à l'étape a) en utilisant une buse de pulvérisation qui conduit à la formation de gouttelettes liquides présentant un diamètre inférieur ou égal à 300 µm ; c) le séchage desdites gouttelettes, d) le broyage du produit solide obtenu à l'étape c) ; e) le mélange en solution d'au moins un tensioactif, d'au moins un précurseur aluminique, d'au moins un précurseur silicique et d'au moins une fraction du produit solide obtenu à l'étape d) de manière à former une suspension dans laquelle le pourcentage volumique en composés non volatils est d'au moins 7 % ; f) l'atomisation par aérosol de la suspension obtenue à l'étape e) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; g) le séchage desdites gouttelettes obtenues à l'étape f) et h) l'élimination dudit tensioactif introduit dans les étapes a) et e) pour l'obtention d'un matériau à porosité mésostructurée.

12. Adsorbant comprenant le matériau aluminosilicate mésostructuré selon l'une des revendications 1 à 10 ou préparé selon le procédé selon la revendication 11.

13. Catalyseur comprenant le matériau aluminosilicate mésostructuré selon l'une des revendications 1 à 10 ou préparé selon le procédé selon la revendication 11.

## Claims

1. A mesostructured aluminosilicate material consisting of at least two elementary spherical particles, each one of said spherical particles consisting of a mesostructured matrix based on silicon oxide and aluminium oxide, said mesostructured matrix having a pore diameter ranging between 1.5 and 30 nm, a Si/Al molar ratio at least equal to 1 and amorphous walls of thickness ranging between 1 and 30 nm, said elementary spherical particles having a diameter D greater than 10 µm and less than or equal to 100 µm.

2. A material as claimed in claim 1, such that said elementary spherical particles have a diameter D ranging between 11 and 70 µm.

3. A material as claimed in claim 2, such that said elementary spherical particles have a diameter D ranging between 11 and 50 µm.

4. A material as claimed in claim 3, such that said elementary spherical particles have a diameter D ranging between 15 and 50 µm.

5. A material as claimed in any one of claims 1 to 4, such that the Si/Al molar ratio of said mesostructured matrix ranges between 1 and 10.

6. A material as claimed in claim 5, such that the Si/Al molar ratio of said mesostructured matrix ranges between 1 and 5.

7. A material as claimed in any one of claims 1 to 6, such that the pore diameter of said matrix ranges between 1.5 and 10 nm.

8. A material as claimed in any one of claims 1 to 7, such that it has a specific surface area ranging between 200 and 1200 m²/g.

9. A material as claimed in claim 8, such that it has a specific surface area ranging between 300 and 1000 m²/g.

10. A material as claimed in any one of claims 1 to 9, such that said matrix based on silicon oxide and aluminium oxide has a hexagonal, vermicular, or cubic structure.

11. A method for preparing a mesostructured aluminosilicate material as claimed in any one of claims 1 to 10, comprising: a) mixing into a solution at least one surfactant, at least one aluminic precursor and at least one silicic precursor ; b) aerosol atomizing the solution obtained in stage a) using a spray nozzle that leads to the formation of liquid droplets of diameter less than or equal to 300 µm ; c) drying said droplets ; d) crushing the solid product obtained in stage c) ; e) mixing into a solution at least one surfactant, at least one aluminic precursor, at least one silicic precursor and at least a fraction of the solid product obtained in stage d) in order to form a suspension in which the volume percentage of non-volatile compounds is at least 7 %; f) aerosol atomizing the suspension obtained in stage e) using a spray nozzle that leads to the formation of suspension droplets, which are precursors of the constituent spherical elementary particles of diameter D such that 10 < D (µm) ≤ 100 of the material according to the invention ; g) drying said droplets obtained in stage f) ; and h) removing said surfactant introduced in stages a) and e) so as to obtain a mesostructured porosity material.

12. An adsorbent comprising the mesostructured aluminosilicate material as claimed in any one of claims 1 to 10, or prepared according to the method as claimed in claim 11.

13. A catalyst comprising the mesostructured aluminosilicate material as claimed in any one of claims 1 to 10, or prepared according to the method as claimed in claim 11.

## Patentansprüche

1. Mesostrukturierter Aluminosilicat-Werkstoff, der aus mindestens zwei kugelförmigen Elementarpartikeln besteht, wobei jeder dieser kugelförmigen Partikel aus einer mesostrukturierten Matrix auf Grundlage von Siliciumoxid und Aluminiumoxid besteht, wobei die mesostrukturierte Matrix einen Porendurchmesser im Bereich von 1,5 bis 30 nm, ein Si/Al-Molverhältnis von mindestens 1 sowie amorphe Wände mit einer Dicke im Bereich von 1 bis 30 nm aufweist, wobei die kugelförmigen Elementarpartikel einen Durchmesser D von mindestens 10 µm und höchstens 100 µm haben.

2. Werkstoff nach Anspruch 1, derart, dass die kugelförmigen Elementarpartikel einen Durchmesser D im Bereich von 11 bis 70 µm haben.

3. Werkstoff nach Anspruch 2, derart, dass die kugelförmigen Elementarpartikel einen Durchmesser D im Bereich von 11 bis 50 µm haben.

4. Werkstoff nach Anspruch 3, derart, dass die kugelförmigen Elementarpartikel einen Durchmesser D im Bereich von 15 bis 50 µm haben.

5. Werkstoff nach einem der Ansprüche 1 bis 4, derart, dass das Si/Al-Molverhältnis der mesostrukturierten Matrix im Bereich von 1 bis 10 liegt.

6. Werkstoff nach Anspruch 5, derart, dass das Si/Al-Molverhältnis der mesostrukturierten Matrix im Bereich von 1 bis 5 liegt.

7. Werkstoff nach einem der Ansprüche 1 bis 6, derart, dass der Durchmesser der Poren der Matrix im Bereich von 1,5 bis 10 nm liegt.

8. Werkstoff nach einem der Ansprüche 1 bis 7, derart, dass er eine spezifische Oberfläche im Bereich von 200 bis 1200 m²/g aufweist.

9. Werkstoff nach Anspruch 8, derart, dass er eine spezifische Oberfläche im Bereich von 300 bis 1000 m²/g aufweist.

10. Werkstoff nach einem der Ansprüche 1 bis 9, derart, dass die Matrix auf Grundlage von Siliciumoxid und Aluminiumoxid eine hexagonale, vermikuläre oder kubische Struktur aufweist.

11. Verfahren zur Herstellung eines mesostrukturierten Aluminosilicat-Werkstoffs nach einem der Ansprüche 1 bis 10, umfassend a) das Vermischen in Lösung mindestens eines Tensids, mindestens einer aluminiumhaltigen Vorläufersubstanz und mindestens einer siliciumhaltigen Vorläufersubstanz; b) das Zerstäuben der Lösung, die in Schritt a) erhalten wurde, als Aerosol unter Verwendung der Zerstäubungsdüse, was zur Bildung flüssiger Tröpfchen führt, die einen Durchmesser von höchstens 300 µm aufweisen; c) das Trocknen der Tröpfchen, d) das Zerkleinern des feststofflichen Produkts, das in Schritt c) erhalten wurde; e) das Vermischen in Lösung mindestens eines Tensids, mindestens einer aluminiumhaltigen Vorläufersubstanz und mindestens einer siliciumhaltigen Vorläufersubstanz und mindestens einer Fraktion des feststofflichen Produkts, das in Schritt d) erhalten wurde, sodass eine Suspension gebildet wird, in welcher der Volumenprozentanteil an flüchtigen Verbindungen mindestens 7 % beträgt; f) das Zerstäuben der Suspension, die in Schritt e) erhalten wurde, als Aerosol unter Verwendung einer Zerstäubungsdüse, was zur Bildung von Suspensionströpfchen führt, welche die Vorläufer der kugelförmigen Elementarpartikel sind, deren Durchmesser D derart ist, dass 10 < D (µm) ≤ 100 ist, und aus denen der erfindungsgemäße Werkstoff besteht; g) das Trocknen der Tröpfchen, die in Schritt f) erhalten wurden, und h) das Entfernen des Tensids, das in den Schritten a) und e) zugesetzt wurde, um einen Werkstoff mit mesostrukturierter Porenbeschaffenheit zu erhalten.

12. Adsorptionsmittel, welches den mesostrukturierten Aluminosilicat-Werkstoff nach einem der Ansprüche 1 bis 10, oder der gemäß dem Verfahren nach Anspruch 11 hergestellt ist, umfasst.

13. Katalysator, welcher den mesostrukturierten Aluminosilicat-Werkstoff nach einem der Ansprüche 1 bis 10, oder der gemäß dem Verfahren nach Anspruch 11 hergestellt ist, umfasst.
